# EUROPEAN PATENT APPLICATION

(11) **EP 3 153 062 A1**
(43) Date of publication of application: **12.04.2017**
(21) Application number: 14895255.9
(22) Date of filing: 17.12.2014
(51) Int. Cl.: A46B 13/04, A61C 17/32

(54) **MECHANICALLY OPERATED SCOURING ABRASION HEAD**

(30) Priority: 16.06.2014 CN 201410266513
(71) Applicant: Wong, Yuen Chiu, Hong Kong (CN)
(72) Inventor: Wong, Yuen Chiu, Hong Kong (CN)
(74) Representative: Sun, Yiming
(86) International application number: PCT/CN2014/094013
(87) International publication number: WO 2015/192623

(57) **Abstract**

The present invention published a method of mechanically operated scouring abrasion and a mechanically operated scouring abrasion head thereof. The scouring abrasion head transmits the pushing force to the top of the scouring abrasion object to scour and abrade the surface of the object. The mechanically operated scouring abrasion head comprises a scouring abrasion object, scouring abrasion head, supporting position and pushing position. The scouring abrasion object is connected with the scouring abrasion head. There is a supporting position on the scouring abrasion head wherein a ratio of a scouring force and an abrasion force is adjusted by adjusting a position and a work pattern of the supporting position to generate scouring and abrasion momentum of different ratio and swing the scouring abrasion object back and forth downward. The present invention deals with the stains in the irregular concaves, which rapidly clean the convex or the stubborn stains on the regular plane which is not able to be achieved by the conventional technology.

## Description

### Field of Invention

The present invention relates to a mechanically operated scouring abrasion head, and more particularly to improve the conventional mechanically operated or manually operated brush, such as the tooth brush, electric brush, pneumatic brush and surface treatment device for the mechanical equipment. The present invention is for cleaning an irregular and rugged plane. The conventional technology is not able to effectively brush the stains inside a concave while the present invention is able to clean the plane especially the stains inside a groove efficiently.

### Description of Related Arts

The conventional mechanically operated or manually operated brush, such as the tooth brush for daily use, or the electric brush, pneumatic brush and surface treatment device for the mechanical equipment for industrial application is incapable of cleaning a plane or a rugged plane.

In industry, in order to clean the stains inside the concave of a rugged plane such as the rust on a rugged corroded plane high pressure is applied on the mechanically operated brush or even a pressure device is needed, which overly scrapes the convex. Much time is needed to clean. If the concave is deep many places is not reachable.

The molar has irregular concave facing and teeth are not neatly arranged and concave in. The conventional tooth brush cleans the surface of the teeth by moving or shaking the brush, which incapable of clean the tooth thoroughly.

The vibrated cleaning device which is pressed on the surface of the object is incapable of effectively cleaning the stubborn stains but is capable of shaking off the liquid stains. The brushes moving on the surface of the object such as electric tooth brush which moves left and right, front and back and rotates clockwise and counter-clockwise. The hair of the industrial high speed rotation pressurized electric or pneumatic brush is tend to be distorted while brushing the convex due to the force taken by the tip of the brush hair. Most part of the momentum applied is consumed due to the bending of the brush hair. The brush sweeps upon the convex but is incapable of cleaning inside the concave effectively. So the brush is incapable of cleaning the irregular convex surface. Part of the concave is able to be barely cleaned if the concave is in the same direction with the sweeping brush. The brush is incapable of cleaning an irregular concave.

Many experiments proves that not matter how much force is pressed down on the brush the tip of the brush bounces over the concave while move horizontally. The brush is incapable of cleaning the concave of different shapes. As for the reachable concave in order to clean the stubborn stain much time and large pressure are needed to press the brush deep into the concave, which in most cases overly scours the convex and causes energy loss and damage.

The cleaning capability of the tip of every brush hair is compromised by the stiffness of the hair besides the unreachable place of the concave. The brush hair is generally pillar-shaped or needle-shaped and made of resilient material. The brush hair is bending while move horizontally, which compromises the pushing force and weakens the cleaning power. The momentum for pushing away the stains stuck on the surface is not effectively transmitted to the tip of the brush hair. If a low resilient brush with high stiffness is adopted the convex is tend to be overly scraped while there is no obvious improvement on the cleaning of the concave.

In fact the electric tooth brush for daily use possess varied ways of brushing but still incapable of effectively cleaning tooth stain on the front tooth, tooth gap and inside the concave of the molar facing. Almost all the mechanically operated brush for industrial application cleans the concave by abrading the convex on the surface.

### SUMMARY OF THE PRESENT INVENTION

An object of the present invention is to provide a mechanically operated scouring abrasion head and a mechanically operated scouring abrasion head to overcome the disadvantages of the conventional technology. The present invention solves the problems of the conventional cleaning device, which is that the conventional device is incapable of scouring effectively and rapidly and is not able to clean the stain inside the concave thoroughly. The mechanically operated scouring abrasion head of the present invention applies most part of the pushing force onto the scouring surface and is able to clean the stubborn stains on the regular or irregular rugged surface more effectively and rapidly than the conventional technology.

The technical solution of the present invention is as follow:
A mechanically operated scouring abrasion head, comprising a scouring abrasion object, a scouring abrasion head, a supporting position, a pushing position, wherein the scouring abrasion object is connected with the scouring abrasion head; the supporting position is set on the scouring abrasion head, wherein a ratio of a scouring force and an abrasion force is adjusted by adjusting a position and a work pattern of the supporting position to generate scouring and abrasion momentum of different ratio; there is one or more pushing positions; the pushing position takes the transmitted force of push and swings the scouring abrasion head; the pushing position coordinates with a force transmission structure which transmits the pushing force to swing the scouring abrasion head and bring the scouring abrasion object to move back and forth to scour downward.

The scouring abrasion object is in any of needle shape, column shape, flake shaped or lump shape, or any combination of needle shape, column shape, flake shape and lump shape; the scouring abrasion object directly scours the surface.

A top of the scouring abrasion object is arranged in a flush, a zigzag, an arc or a wave configuration, or any combination of flush, zigzag, arc and wave.

There is a scatter preventing fence around the scouring abrasion object, wherein the scatter preventing fence protects the scouring abrasion object which is exposed on one end.

The supporting position of the mechanically operated scouring abrasion head is able to be an axis or non-axis, such as a sliding structure (a sliding block pressed inside a sliding slot), hanging structure ( supporting by way of hanging using non-rigid material), etc..

The pushing force of the scouring abrasion head of the present invention adopts a unidirectional pushing force, such as sole pushing force, sole pulling force, twist to one side, rotating force etc.. An elastic force pushed return mechanism (such as a spring, metal dome, elastic material, cam etc.) is adopted to reposition the scouring abrasion head until the next push.

The present invention is able to adopt a unidirectional pushing force and reposition the scouring abrasion head by the elastic force of the spring. The pushing position is pushed by the unidirectional force and the scouring abrasion head scours downward. The top end of the scouring abrasion object scours downward. The unidirectional force disappears. The elastic force of the spring repositions the scouring abrasion head until the next push.

For a shaking force balance consideration, if the whole row of the scouring abrasion object scours downward or upward simultaneously the momentum swings the brush up and down. A relative movement is adopted to balance the impulsion, which is that while part of the brush is plunging down part of the brush is rushing up to balance the impulsion. One simple way is to set the supporting position 113 on the middle of the scouring abrasion head 111 to reduce the swing force by leverage. The pushing force pushes the right part and the left part of the brush plunges in turn, which stabilizes the present invention.

A substitution is that a mechanically operated scouring abrasion head comprises the scouring abrasion object, the scouring abrasion head, the supporting position, the pushing position, wherein the scouring abrasion object is connected with the scouring abrasion head; the supporting position of the scouring abrasion head is a sliding structure; the scouring abrasion head supporting position is set inside a shell; the ratio of the combined force of scouring and abrading is adjusted by the sliding slot inside the shell to generate a scouring and abrasion momentum of different ratio; on the scouring abrasion head there is the pushing position which takes a transmitted pushing force to swing the scouring abrasion head; the pushing position coordinates with a force transmission structure, which transmits and transfer the pushing force into a swing force to bring a top of the scouring abrasion object to move back and forth to scour downward.

The present invention adopts the structure which based on the impulse momentum principle to make the scouring abrasion object to generate a plunge (or pecking) impulse. The top of the varied scouring abrasion object continuously scours and abrades the rugged plane which needs cleaning. The force is born by the stiffness of the scouring abrasion object which is able to effectively clean. The scouring abrasion object is able to scour and abrade downward deep into even the irregular concave surface. The accessories of the present invention are able to be replaced. The present invention is able to be integrated with any mechanically operated energy source such as the magnetic, electric, motor driven, pneumatic operated, etc..

The advantages of the present invention are as the following:
1. The present invention has unique cleaning power and is able to effectively scour and abrade the rugged surface to clean the stubborn stains. The present invention is able to utilize most part of the momentum to push away the stains. Not matter for convex or concave surface the present invention possesses extraordinary cleaning power.
2. The present invention is able to clean the stains inside the concave which is not reachable by the conventional brush. By properly moving the scouring abrasion head the partly covered position is able to be cleaned by the scour and abrasion.
3. The application of the present invention reduces the possibility of overly scrapping the convex surface due to less pressure is needed. The present invention doesn't rely on large pressure put on the brush to deepen the cleaning depth and improve the cleaning performance. The possibility of applying much pressure and spending much time to clean the shallow concave by overly scraping the convex is reduced. The scouring and abrading is able to reach the shallow concave without much pressure.

### BRIEF DESCRIPTION OF THE DRAWINGS

Fig. 1A and 1B are a status of a single brush hair cleaning the concave of the conventional technology.
Fig. 2A and 2B are a status of a single brush hair cleaning the concave in another direction of the conventional technology.
Fig. 3 is a status of a whole brush cleaning the concave of the conventional technology.
Fig. 4A and 4B are perspective views of the present invention before and after plunging onto the concave.
Fig. 5A and 5B are perspective views of the present invention before and after plunging onto the convex.
Fig. 6A, 6B and 6C are perspective views of the present invention cleaning varied concaves and convexes.
Fig. 7A, 7B, 7C, 7D, 7E, 7F, 7G and 7H are demonstrations of the motion trails 122 of a top end of the scouring abrasion object which adopts different supporting positions and different arrangements of the top end.
Fig. 8A, 8B&8C, 8D illustrates two ways of adopting a unidirectional pushing force and repositioning the brush by a spring of the present invention.
Fig. 9A and 9B illustrates a shaking force balance of the present invention. In order to reduce the swing generated by the whole scouring abrasion head swinging up and down simultaneously, which causes discomfort for handheld, the supporting swing axis is set near the middle of the scouring abrasion head. The swing force is reduced by leverage. By adopting a set of pushing positions to apply the pushing force on the left and right respectively makes the handheld brush more stable.
Fig. 10A and 10D illustrates a way of adopting the shaking force balancing and twist energy source. The supporting position is set near the middle of the scouring abrasion head and reduces the swing by leverage. The scouring abrasion head in the illustration adopts a set of force taken positions. The scouring abrasion head is divided into left and right part by the axis. The cam makes the left part and right part of the scouring abrasion head plunging down in turn.
Fig 10B, 10C, 10E and 10F are cross-section views of C-C, D-D, E-E and F-F.
Fig 11A, 11B and 11C are perspective views of adopting a sole pushing energy source without axis for supporting. 11 A illustrates an assembly of a shell and the scouring abrasion head. 11 B is a cross-section view of B-B. The supporting position 113 hides inside the shell 123 by a way of sliding to slide the scouring abrasion head 112. The pushing force 115, the pushing position 114 and the spring 124 for reposition swings the scouring abrasion head 112 back and forth.
Fig. 12 is a perspective view of an integration of a rotating energy source.

Elements in the figure: 111-scouring abrasion object; 112-scouring abrasion head; 113-supporting position; 114-pushing position; 115-pushing force; 116-scatter preventing fence; 121- direction of a scouring abrasion force; 122- motion trail of a scouring abrasion object; 123- shell; 124- spring; 125-cam; 126- force transmission structure; 127- energy source force.

### DETAILED DESCRIPTION OF THE PREFERRED EMBODIMENT

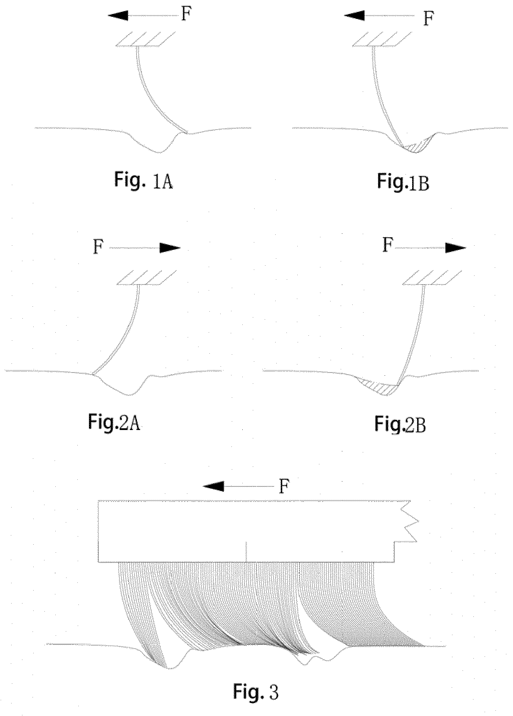

Referring to Fig. 1 A, 1 B, 2A, 2B and Fig. 3, F is the direction of the force and the area in the shade is never able to be cleaned. As shown in the figure, the cleaning power of the conventional scouring brush is weak and is not able to clean the stubborn stains. When the brush is moving on the surface of the object, the tip of the brush hair takes the force from the convex and is deformed. Most part of the momentum applied is consumed by the bending brush hair. The brush sweeps over the convex and is not able to scour deep into the concave. So the brush is not able to clean the stains inside the irregular concave.

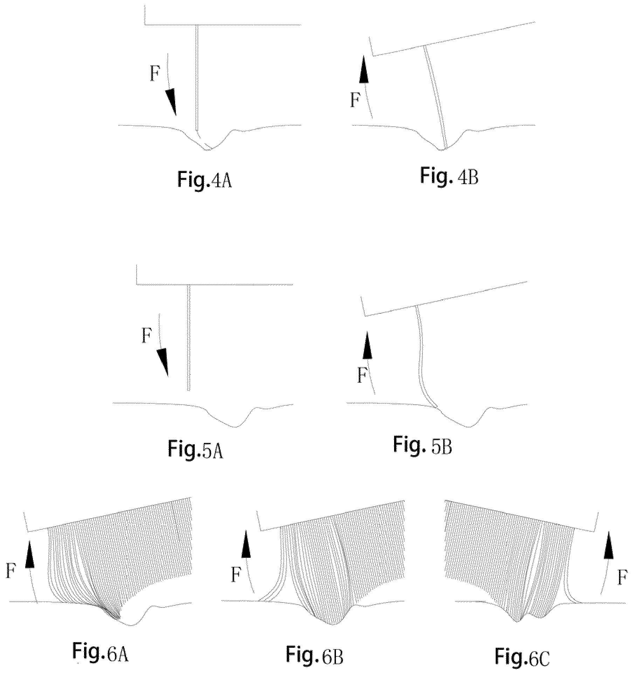

Fig. 4A, 4B, 5A, 5B & 6A, 6B, 6C, is a perspective view of a method of mechanically operated scouring abrasion of the present invention. The method is based on the physical impulse momentum principle. The pushing force makes the scouring abrasion object generates a plunge (or pecking) momentum on the surface of the object. The hair tip of varied brushes is continuously scours and abrades the rugged surface needs cleaning. The force is supported by the stiffness of the brush hair which has strong cleaning power. The brush hair is able to scouring and abrading deep even in an irregular concave surface downwardly. The accessories of the present invention are able to be replaced. The present invention is able to be integrated with any mechanically operated energy source such as the magnetic, electric, motor driven, pneumatic operated, etc..

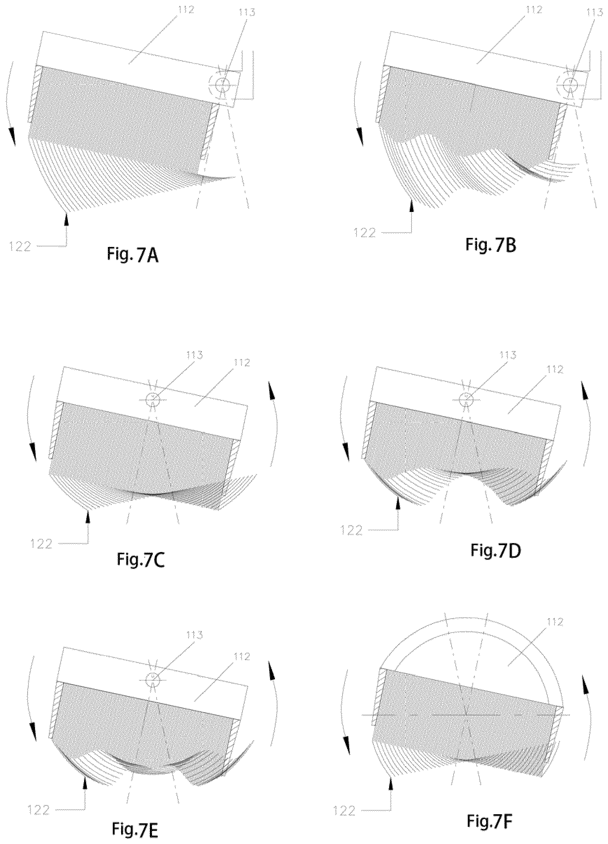

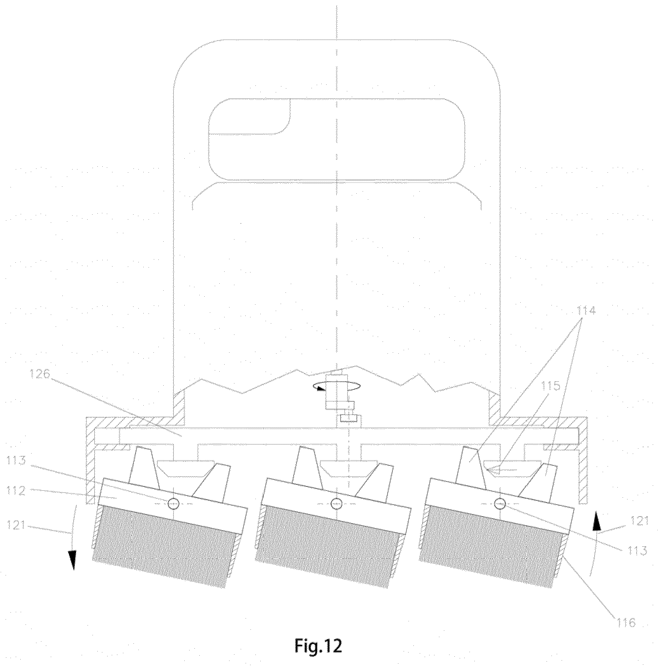

Fig. 7A, 7B, 7C, 7D, 7E, 7F, 7G , 7H & Fig. 8A, 8B, 8C, 8D, 9A, 9B, 10A, 10D, 11A, 11C and Fig.12 illustrate the mechanically operated scouring abrasion head of the present invention, comprising a scouring abrasion object 111, a scouring abrasion head 112, a supporting position 113, a pushing position 114, wherein the scouring abrasion object 111 is connected with the scouring abrasion head 112; the supporting position 113 is set on the scouring abrasion head 112, wherein a ratio of a scouring force and an abrasion force is adjusted by adjusting a position and a work pattern of the supporting position 113 to generate scouring and abrasion momentum of different ratio; there is one or several pushing positions 114. The pushing position 114 takes the transmitted pushing force 115 and swings the scouring abrasion head 112; the pushing position 114 coordinates with a force transmission structure which transmits the pushing force 115 to bring the scouring abrasion object to move back and forth to scour downward.

The scouring abrasion object 111 is in any of needle shape, flake shape, column shape, lump shape and nail shape, or any combination of flake shape, column shape, lump shape and nail shape; the scouring abrasion object 111 directly scours the surface.

A top of the scouring abrasion object is arranged in a flush, a zigzag, an arc or a wave configuration, or any combination of flush, zigzag, arc and wave.

A scatter preventing fence 116 is around the scouring abrasion object, wherein the scatter preventing fence 116 protects the scouring abrasion object 111 which is exposed on one end.

The scatter preventing fence 116 is mainly for enhancing the pressing force and prolonging the service life of the scouring and abrasion object in industrial application. The scatter preventing fence 116 is able to prevent the scattering scouring abrasion object pricking the oral skin when the scatter preventing fence 116 applied in a tooth brush.

The energy source 127 of different directions is able to be transmitted by the force transmission structure. The present invention is able to be applied in different scouring tools, kits, equipment, instruments, tooth brush, mechanically operated brush, pneumatic brush, etc.. The most common energy source which generates rotating force, clockwise and counter-clock wise twist force and pushing force is able to be transmitted by the force transmission structure 126 and connected to the scouring abrasion head of the present invention.

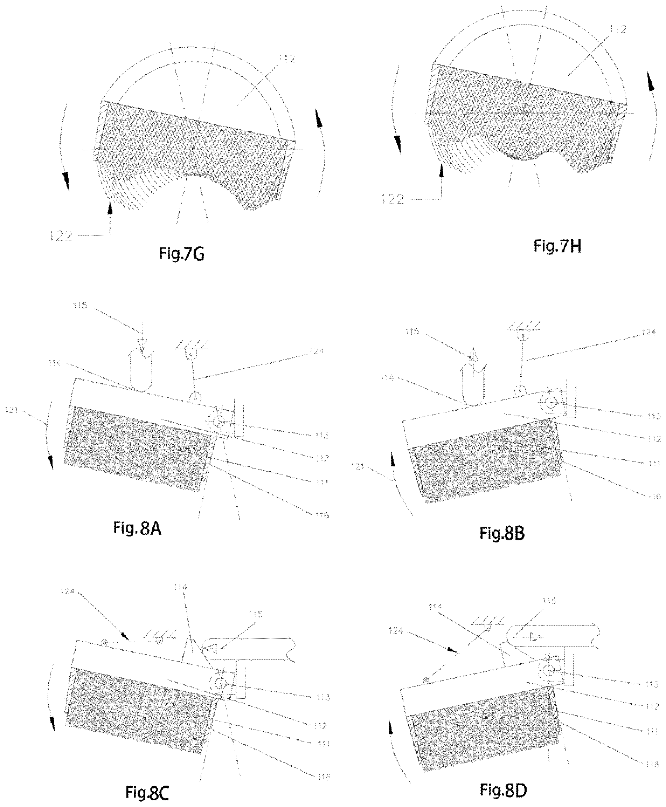

Fig. 7A, 7B, 7C, 7D, 7E, 7F, 7G and 7H illustrates that the scouring abrasion head 112 is a brush assembled with one set or several sets of the scouring abrasion objects 111. The ration of the scouring and abrading force is adjusted by the change of axis of the supporting position 113 to generate a momentum of scouring and abrading of different ratio. The combination of scouring and abrading force is decided by varied working application. 112 is the motion trail of the tip of the brush which is tangential to the scouring momentum. The abrading momentum is centripetal.

Theoretically, the scouring abrasion force is zero when the vertical direction of scouring abrasion object 111 is in the same direction with the movement. The scouring abrasion object 111 will push with the stiffness and plunge on the surface directly. The scouring abrasion object is pressed to the maximum value and bending which makes the scouring abrasion object tip bouncing off.

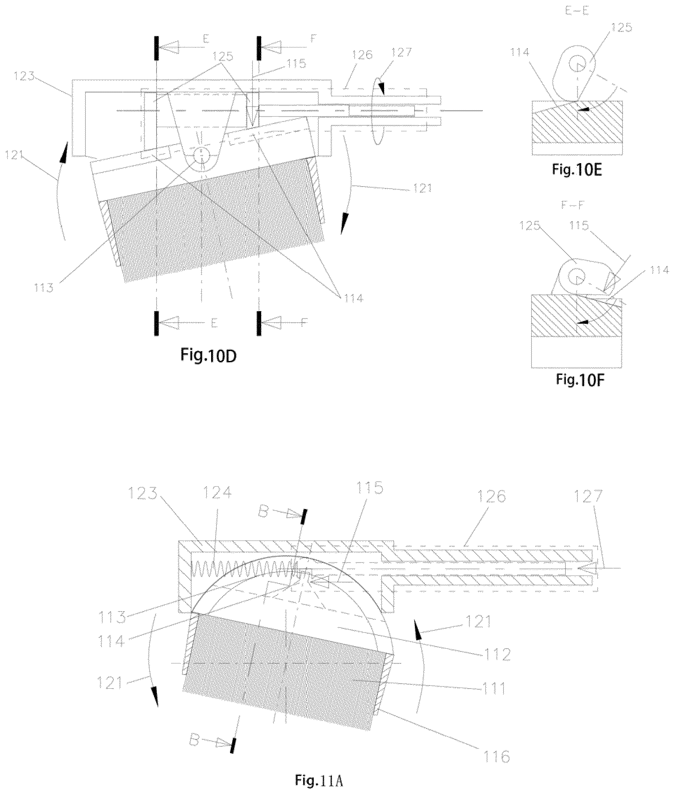

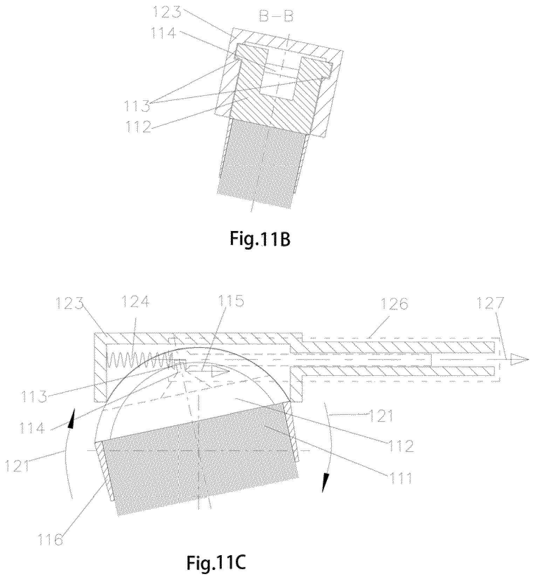

The present invention is able to adopt unidirectional force. An elastic force pushed return mechanism (such as a spring, metal dome, elastic material, elastic structure, etc.) is adopted to reposition the scouring abrasion head. As illustrated in Fig.8A, 8B & 8C, 8D & 11A, 11C the pushing position 114 is pushed by the unidirectional force 115 and makes the scouring abrasion head 112 scouring down. The scouring abrasion head 112 makes the top of the scouring abrasion object 111 scouring and abrading down. When the unidirectional force disappears, the elastic force of the spring 124 repositions the scouring abrasion head until the next push

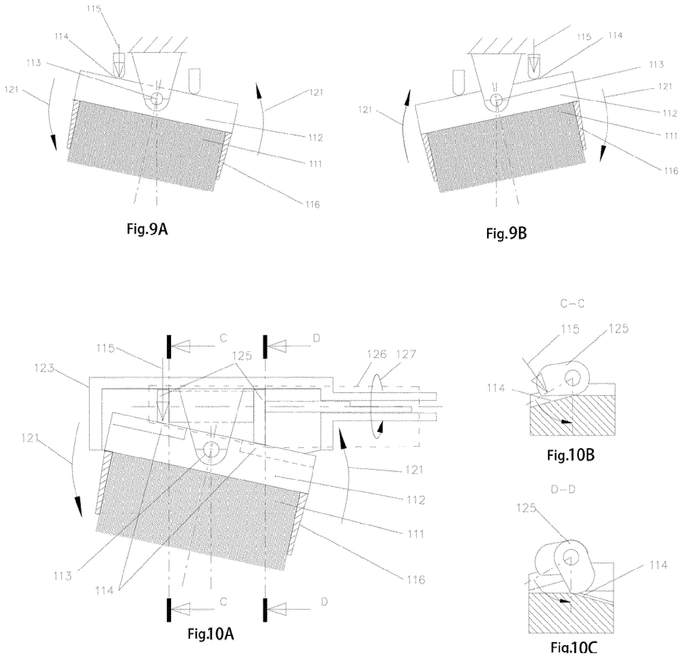

Fig. 9A and 9B illustrates a shaking force balancing consideration. If the whole row of the scouring abrasion object scours downward or upward simultaneously the momentum swings the brush up and down and causes discomfort for handheld (most mechanically operated brush is handheld). A relative movement is adopted to balance the impulsion, which is that while part of the brush is plunging down part of the brush is rushing up to balance the impulsion. The impulsion is balanced for comfortable handheld. The supporting position 113 is settled on the middle of the scouring abrasion head to reduce the swing force by leverage. The pushing force (115) pushes the right part and the left part of the pushing position 114 in turn, which makes the handheld stable.

Fig.10A, 10B, 10C, 10D, 10E and 10F illustrates a way of shaking force balancing. In order to remove the handheld discomfort caused by the whole row of the scouring abrasion object scouring downward or upward simultaneously, the supporting position 113 is settled on the middle of the scouring abrasion head to reduce the swing force by leverage. Two cams 125 strikes the pushing position 114 on the left and right side of the scouring abrasion head 112 to apply the pushing force 115 on the left and right side of the scouring abrasion head respectively, which makes the present invention more stable for handheld.

A substitution solution is illustrated in Fig. 11 A, 11B and 11C. Fig.11 A illustrates a combined structure of a shell and the scouring abrasion head. Fig. 11B is a cross-section view of B-B. The supporting position 113 hides inside the shell 123 by a way of sliding to slide the scouring abrasion head 112. The pushing force 115, the pushing position 114 and the spring 124 for reposition swings the scouring abrasion head 112 back and forth. The practice adopts a sole pushing energy source without axis for supporting. The mechanically operated scouring abrasion head comprises the scouring abrasion object 111, the scouring abrasion head 112, the supporting position 113, the pushing position 114, wherein the scouring abrasion object 111 is connected with the scouring abrasion head 112; the supporting position 113 hides inside the shell 123 by a way of sliding to slide the scouring abrasion head 112. A ratio of the scouring force and the abrasion force is adjusted to generate scouring and abrasion momentum of different ratio through the sliding slot inside the shell 123. The force transmission structure transmit the pushing force 115 generated by he unidirectional energy source force 127 to the pushing position 114. The pushing position 114 takes the pushing force 115 and pushes the left side of the scouring abrasion head 112 down. The spring 124 repositions the scouring abrasion head to the right side down position.

The present invention provides a mechanically operated scouring abrasion head which is able to clean the stains inside the concave of rugged surface. The energy source 127 of different direction generates the pushing force 115 through all kinds of force transmission structure 126 and pushes the pushing position 114 to swing the scouring abrasion head 112. The top end of the scouring abrasion object 111 is pushed downwardly to the surface needs cleaning. The tip of the scouring abrasion object plunges onto the surface needs cleaning from a distance one after another. The scouring abrasion object 111 applies most part of the mechanical force on the stains of the surface by stabs. The backlash of the top of scouring abrasion object is absorbed by the material of the scouring abrasion object and passes back to the sturdy scouring abrasion head. The tip of the scouring abrasion head has strong cleaning power to push away the stains.

Besides, when the scouring abrasion object plunges a slight horizontal abrasion is generated. The top end of the scouring abrasion object continuously scours and abrades the surface needs cleaning. The scouring and abrading is supported by the speed and stiffness of the scouring abrasion object, which has a cleaning power which the conventional horizontal sweeping brush doesn't possess. The scouring abrasion object acts from downwardly and strikes the irregular concave from a distance, which is able to scour and abrade deep into the concave. When the scouring and abrasion head is moving properly the stains even the covered stains inside the concave is able to be cleaned by scouring and abrading.

The scouring abrasion object of the present invention adopts different materials and is applicable to varied fields, such as rust removal, surface cleaning, oral hygiene, etc.. The scouring abrasion object is able to be made in varied size to match varied energy source. The present invention is able to be applied in handheld tools such as tooth brush, engineering tools such as electric steel wire brush, pneumatic steel wire brush and fixed machine such as a production line for scouring and abrading slab material.

The scouring abrasion head is able to be in any shape, such as round, square, rectangle, etc.. Or the scouring abrasion head is placed outside or inside a roller.

The protruding top of the scouring abrasion object is arranged in a flush, an arc, a wave or a zigzag configuration, or any combination of flush, zigzag, arc and wave of different layers specially made for different working fields.

The scouring abrasion head is scouring and abrading in line or curve trail to deal the plane of rugged surface, which is applied in handheld, fixed or varied machinery.

The scouring abrasion head takes the impulsion momentum of the brush to push away the stains, which may cause instability for handheld. The impulsion momentum is able to be leveraged by a equal force from a balancing movement.

The scouring abrasion head is able to be simplified to a brush without optimized design, wherein the scatter preventing fence is able to be removed; or several scouring abrasion head is able to be integrated; or the scouring abrasion object is replace with other material. Such as the firm and sharp material is able to be used for scratching the plane or rugged surface; or replacing the present invention with sanding material for scouring and grinding; or replacing the present invention with some lump shaped material for scrape and chop.

Liquid material is able to be used while scouring and abrading to scour and coat the rugged surface. The conventional problem of unable to hide the liquid material in the concave position when coating the rugged surface is solved.

The present invention is made into the application of the same action to clean the black stains on the bath mat, which is able to clean most of the stains inside the concave where the conventional brush is not able to reach.

The present invention is made into a tooth brush of the same action. The tooth stains inside the tooth gap is not able to be cleaned using the conventional tooth brush. After using the present invention for one week, most of the tooth stains disappears. The conventional tooth brush is not able to clean the tooth stains inside the concave facing or the in the overlapped part between teeth, which by using the present invention is gradually fading.

## Claims

1. A mechanically operated scouring abrasion head, comprising a scouring abrasion object, a scouring abrasion head, a supporting position, a pushing position, wherein the scouring abrasion object is connected with the scouring abrasion head; the supporting position is set on the scouring abrasion head, wherein a ratio of a scouring force and an abrasion force is adjusted by adjusting a position and a work pattern of the supporting position to generate scouring and abrasion momentum of different ratio; the pushing position takes the force of push, pull and strike and swings the scouring abrasion head; the pushing position coordinates with a force transmission structure which transmits the pushing force to bring the scouring abrasion object to move back and forth to scour downward.

2. The mechanically operated scouring abrasion head, as recited in claim 1, wherein the scouring abrasion object is in any of needle shape, column shape, flake shape or lump shape, or any combination of needle shape, column shape, flake shape and lump shape; the scouring abrasion object directly scours the surface.

3. The mechanically operated scouring abrasion head, as recited in claim 1, wherein a top of the scouring abrasion object is arranged in a flush, a zigzag, an arc or a wave configuration, or any combination of flush, zigzag, arc and wave.

4. The mechanically operated scouring abrasion head, as recited in claim 1, comprising a scatter preventing fence around the scouring abrasion object, wherein the scatter preventing fence protects the scouring abrasion object which is exposed on one end.

5. The mechanically operated scouring abrasion head, as recited in claim 1, wherein in order to comfortably hold the scouring abrasion head while the whole scouring abrasion head swing up or down, the supporting position is settled in a middle of the scouring abrasion head to reduce a swing force by lever; the pushing force is applied on a right part and left part of the scouring abrasion head in turn to enhance handheld stability.

6. The mechanically operated scouring abrasion head, comprising the scouring abrasion object, the scouring abrasion head, the supporting position, the pushing position, wherein the scouring abrasion object is connected with the scouring abrasion head; the supporting position of the scouring abrasion head is a sliding structure; the scouring abrasion head supporting position is set inside a shell; the ratio of the combined force of scouring and abrading is adjusted by the sliding slot inside the shell to generate a scouring and abrasion momentum of different ratio; on the scouring abrasion head there is the pushing position which takes a transmitted pushing force to swing the scouring abrasion head; the pushing position coordinates with a force transmission structure, which transmits and transfer the pushing force into a swing force to bring a top of the scouring abrasion object to move back and forth to scour downward.

7. The mechanically operated scouring abrasion head, as recited in claim 1, wherein the supporting position is able to be an axis or non-axis.
